# Europäisches Patentamt
# European Patent Office
# Office européen des brevets

(19)

(11) Publication number: **0 058 544**
**B1**

(12) **EUROPEAN PATENT SPECIFICATION**

(45) Date of publication of patent specification: **30.04.86**

(51) Int. Cl.⁴: **F 16 C 27/06, B 60 K 17/24**

(21) Application number: **82300727.3**

(22) Date of filing: **12.02.82**

(54) **Improvements in or relating to resilient mountings.**

(30) Priority: **14.02.81 GB 8104679**

(43) Date of publication of application:
**25.08.82 Bulletin 82/34**

(45) Publication of the grant of the patent:
**30.04.86 Bulletin 86/18**

(84) Designated Contracting States:
**DE FR IT SE**

(56) References cited:
**DE-C- 889 268**
**DE-C- 920 046**
**US-A-2 155 919**
**US-A-2 767 035**
**US-A-2 933 354**
**US-A-3 140 901**
**US-A-3 961 829**

(73) Proprietor: **DUNLOP LIMITED**
**Dunlop House Ryder Street St. James's**
**London SW1Y 6PX (GB)**

(72) Inventor: **Moore, Alan Frederick**
**15 Catherines Close**
**Burbage Leicestershire (US)**

(74) Representative: **Badger, John Raymond et al**
**Dunlop Limited Group Patent Department P.O.**
**Box 504**
**Erdington Birmingham B24 9QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention concerns improvements in or relating to resilient mountings and in particular, though not exclusively, to resilient mountings for supporting the ball race of a divided propeller shaft of a motor vehicle. Such mountings are commonly referred to as centre bearings.

Conventional resilient mountings for supporting the ball race of a divided propeller shaft of a motor vehicle commonly comprise an outer rigid tubular member and an inner rigid tubular member positioned within the outer member and radially spaced therefrom by a resilient annular diaphragm. In use the outer member is secured to the vehicle body and the inner member locates the ball race so that both radial and axial movement of the shaft relative to the vehicle body are accommodated by deformation of the diaphragm.

The radial space envelope in which such mountings are received is fixed and hence the size of mounting that can be accommodated is determined by factors other than the radial load and axial deflection requirements. Accordingly in order to allow variation of design of diaphragm to meet different radial load and/or axial deflection requirements the diaphragm is positioned at one end of the mounting.

A disadvantage of this construction is that the diaphragm is off-set from the centre of the mounting and hence from the centre of the shaft ball race with the result that under radial loads an induced conical movement is produced which unfavourably affects the performance of the mounting. This problem can be solved (see e.g. US—A—2933354) by providing a pair of resilient annular load bearing diaphragms interconnecting the inner and outer members and arranged, preferably symmetrically, one on either side of a plane including the centre of the mounting and extending transverse to the longitudinal axis of the mounting so as to produce a balanced construction.

However, the provision of a pair of diaphragms arranged axially one on either side of the centre of the mounting and shaft ball race instead of one diaphragm axially off-set from the centre of the shaft ball race significantly reduces the rate of dissipation of heat generated within the ball race, and the overall performance and durability of an assembly of a resilient mounting and ball race is thereby adversely affected.

In order at least to mitigate this problem it is provided by the present invention that in a resilient mounting of a kind having a pair of resilient annular load bearing diaphragms interconnecting the inner and outer rigid members and defining an annular chamber within the mounting at least one of the diaphragms is formed with a slot. In consequence that fluid, usually atmospheric air, surrounding the resilient bearing and ball race is able to circulate within the chamber and thereby serve to cool the ball race.

Preferably each diaphragm is provided at a respective one end of the mounting and is of substantially C-shape in axial cross-section whereby relative radial movement between the inner and outer members is accommodated by bending of the diaphragms in the apex regions. Preferably the apex regions of the diaphragms extend in opposite directions, preferably axially outwards of the mounting so as to project beyond the ends of the inner and outer members.

Preferably a resilient buffer is positioned in the chamber to restrict radial movement between the members beyond a predetermined magnitude. Preferably the buffer is associated with one of the members and projects radially towards the other member leaving a gap therebetween in the static load condition. Preferably the buffer comprises an annular ring which may be continuous or segmental in the circumferential direction thereof.

The ring may be of any suitable cross-section but is preferably of generally triangular axial cross-section having the apex directed towards said other member.

Preferably means is provided to reduce friction between contacting surfaces of the ring and said other member when the mounting is subjected to radial loads beyond said predetermined magnitude. Such means may comprise a coating of low friction material on one or both of the contacting surfaces or at least one abutment of low friction material secured to the ring or said other member. By low friction material is meant a material having a coefficient of friction less than 0.3.

In a preferred construction confronting inner and outer surfaces of the outer and inner members are cylindrical and the diaphragms comprise the end portions of an annular hollow cylindrical bush the inner and outer centre portions of which are attached to the inner and outer rigid members respectively and the buffer member is integral with one of the centre portions.

The mounting may be moulded such that the longitudinal axes of the inner and outer members are radially off-set when the mounting is in an unloaded condition. Preferably the extent of the off-set is selected such that when a static load is applied to the inner rigid member e.g. due to the weight of a divided propeller shaft supported by the inner rigid member, the inner member adopts a desired resultant position, either co-axial or off-set relative to the outer member.

Preferably the outer member is constituted by two tubular elements which are independent from one another during moulding of the mounting to allow use of the reusable mould core to form the chamber within the mounting, the tubular elements being axially separable to release the mould core and allow the core to be removed radially whereupon the elements may be subsequently joined together e.g. by bolting, rivetting or mechanical interlock etc. The mould core may be split into two or more segments to facilitate removal.

In use of the mounting to support the divided propeller shaft of a motor vehicle the outer member may be rigidly attached to the vehicle body whereby radial and axial deflection of the shaft relative to the vehicle body is accommodated by deformation of the diaphragms. Alternatively where the assembly is required to have a high radial stiffness and a low axial stiffness the mounting is preferably adapted for pivotal movement with respect to the vehicle body about an axis transverse to the cylindrical axis of the mounting whereby the radial stiffness of the assembly is determined by the radial stiffness of the diaphragms and the axial stiffness of the assembly is determined by the torsional stiffness of the pivot arrangement, i.e. the radial stiffness of the diaphragms may be selected to provide any required radial load capability without affecting the overall axial deflection capabilities of the assembly.

The invention will now be described in more detail, by way of example only, with reference to the accompanying drawings wherein:

Figure 1 is an end view of a mounting in accordance with the present invention;

Figure 2 is a side view of the mounting shown in Figure 1;

Figure 3 is a section, to an enlarged scale, on the line 3—3 of Figure 1;

Figure 4 is a side view of the mounting shown in Figures 1 to 3 as moulded;

Figure 5 is an end view of an installation incorporating the mounting shown in Figures 1 to 3;

Figure 6 is a side view of the installation shown in Figure 5, and

Figure 7 is a side view similar to Figure 6 showing the installation in an axially deflected position.

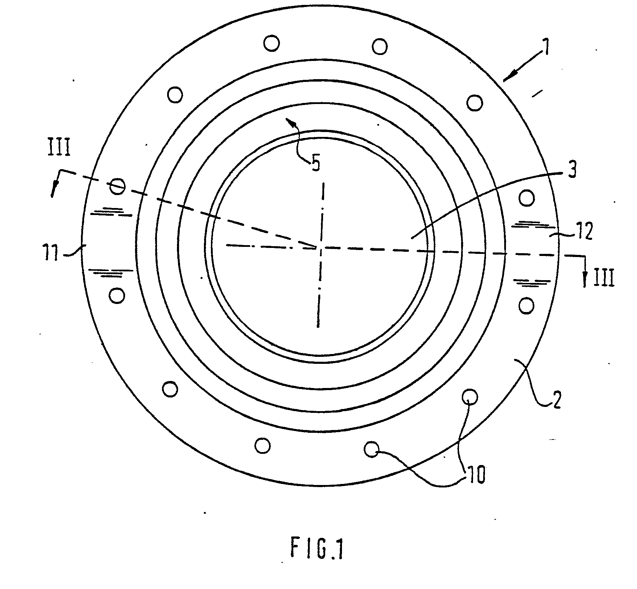

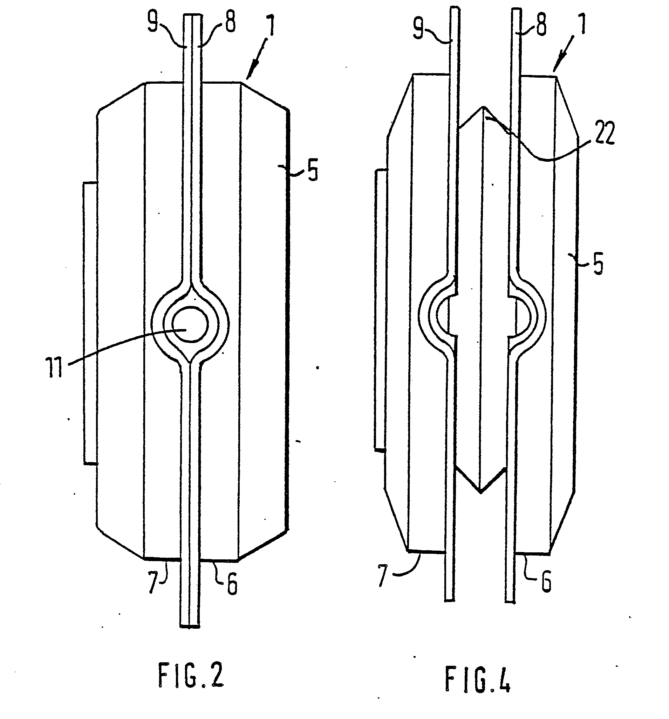

The mounting 1 shown in Figures 1 to 3 of the accompanying drawings comprises an outer rigid member 2 formed with a cylindrical aperture 3 in which is situated an inner rigid member 4, the outer and inner members being radially spaced apart by a resilient bush 5 acting between the members 2, 4.

The outer member 2 is formed by two annular metal rings 6, 7 which define the aperture 3. Each ring 6, 7 has a radially outwardly directed flange 8, 9 respectively at one end and the flanges 8, 9 are secured together by a plurality of circumferentially spaced rivets 10. The flanges 8, 9 are deformed at diametrically opposed positions to form two location holes 11, 12 for a purpose to be described in more detail below.

The inner member 4 comprises an annular cylindrical metal tube 13 the axial length of which is slightly less than the axial length of the outer member 2. One end of the tube 13 is radiused to form a radially inwardly directed flange 14 and the tube is contained within the axial extent of the aperture 3.

The bush 5 comprises an annular cylindrical hollow rubber body 15 having inner and outer tubular centre portions 16 and 17 in which the inner and outer members 4 and 2 are embedded respectively and end portions defining respective annular diaphragms 18, 19 extending between opposed end portions of the inner and outer members 2, 4 and arranged symmetrically with respect to a transverse plane P including the centre of the mounting. In addition one end of the bush 5 is provided at the radially inner periphery thereof with a tubular extension 20 which in use of the mounting acts as a dirt seal.

Each diaphragm 18, 19 is of substantially C-shape in axial cross-section having the apex thereof directed axially outwards of the mounting, whereby the diaphragms are deformable in the radial direction by bending about the apices.

One or both of the diaphragms is slotted to allow circulation of a cooling fluid e.g. air through a chamber 21 defined by the hollow body 15.

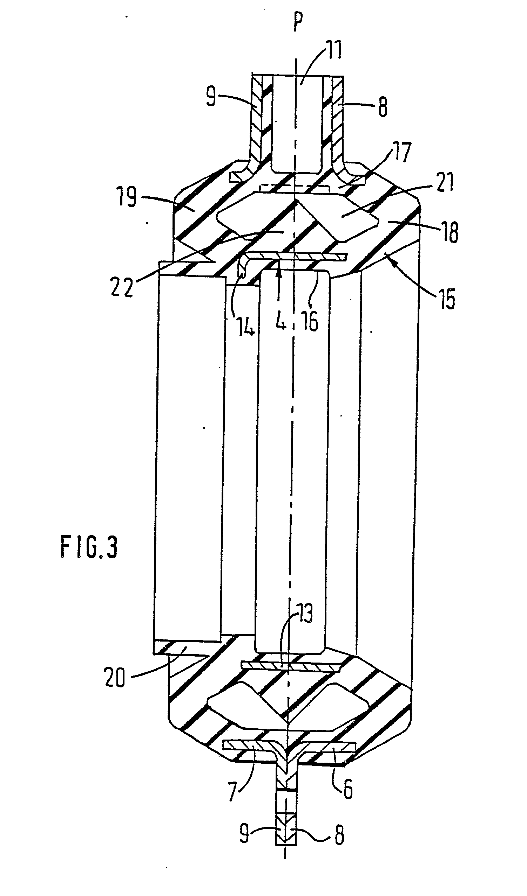

In the chamber 21 there is positioned an annular buffer ring 22 of triangular cross-section integral with inner centre portion 16 of the body 15. The apex of ring 22 projects radially outwards towards the outer centre portion 17 of the body 15 and is spaced therefrom in the unloaded condition of the mounting. The ring 22 serves to limit relative radial movement between the inner and outer members 4, 2 under radial loads beyond a predetermined magnitude. An insert of low friction material e.g. nylon may be provided on the contacting surface of the centre portion 17 as shown in dotted lines in Figure 3 to reduce friction between contacting surfaces of the ring 22 and the centre portion 17 of the body 15.

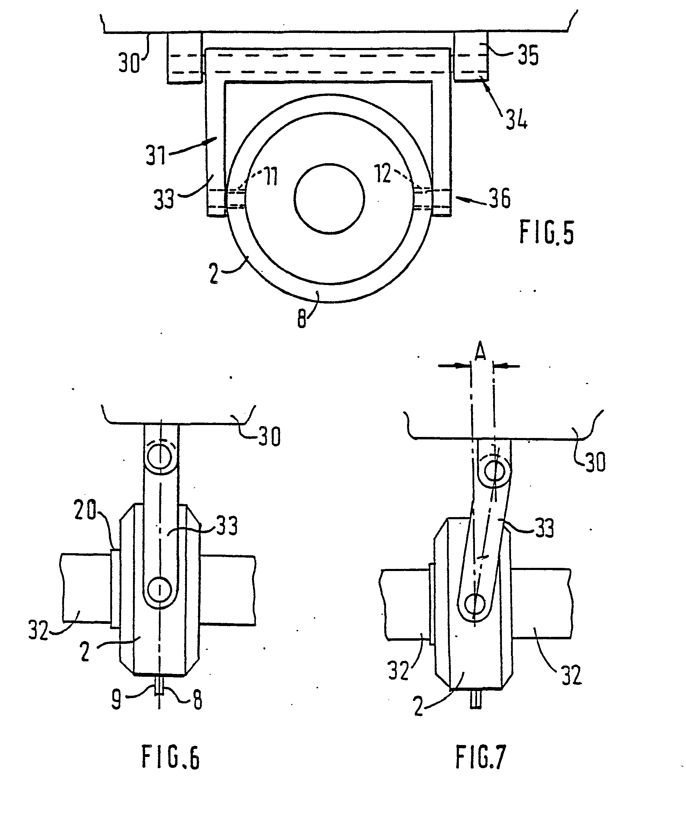

The above-described mounting may be moulded integrally in one piece using a reusable core to form the chamber 21 by moulding the mounting with the rings 6, 7 initially unconnected thereby enabling the core to be released by axially moving the rings 6, 7 apart as shown in Figure 4 and removing the core radially, the rings 6, 7 being subsequently brought together again and the flanges 8, 9 rivetted together. Alternatively a mould core defining the chamber may be removed axially through a slot allowing the outer tubular member to be formed from a single component.

The above-described mounting is suitable for mounting the ball race of a vehicle split propeller shaft to a vehicle body and one such installation is shown in Figures 5 to 7 in which the outer member 2 is secured to the vehicle body 30 by means of a U-shaped link 31 and the inner member 4 receives the ball race of the split shaft 32. As shown each limb 33 of the link 31 is pivotally connected at one end to the vehicle body by respective pivot means 34 including a mounting bracket 35 for attachment to the vehicle body and at the other free end to the outer member 2 by respective pivot means 36 received in the locating holes 11, 12 defind by the flanges 8, 9. Each pivot means 34, 36 comprises a rubber bush pivot and the torsional stiffness of the pivot may be varied by altering the characteristics of the bush.

In use relative radial movement between the shaft and the vehicle body under radial loads up to a predetermined magnitude is accommodated by radial deformation of the diaphragms 18, 19 whereupon the ring 22 contacts the outer centre

3

portion 17 of the body 15 and further radial movement is buffered by compression of the ring 22. Axial displacement A of the shaft relative to the vehicle body is accommodated by pivotal movement of the link 31 relative to the mounting and the vehicle body.

The symmetrical arrangement of the diaphragms 18, 19 to either side of a transverse plane through the centre of the mounting prevents induced conical movement being produced as a result of relative radial movement between the shaft and the vehicle body under radial loads while the pivot arrangement allows for variation in the axial position of the mounting on initial installation as well as providing the required axial flexibility in operation.

The external surface of the outer tubular member may be of any desired cross-section and the outer member may be located in a complementary opening in a housing mounted for pivotal movement with respect to the vehicle body. The outer tubular member may be adapted for either pivotal mounting as above described or fixed mounting with respect to a component to which it is secured in use so that both radial and axial deflection are controlled by the diaphragms.

The resilient buffer may be integral with the outer centre portion of the bush and, if required, the inner centre portion provided with an insert made of a material having a low coefficient of friction. The resilient buffer may be made from the same or a different elastomer to that forming the remainder of the bush depending on the required characteristics of the buffer. In certain applications the buffer may be omitted altogether. A respective tubular extension may be provided at each end of the bush to seal both ends of the mounting with respect to a component received within the inner member.

Attention is directed to European Patent Application 85103582.4 (EP—A—0160212) divided out of the present application and claiming a resilient mounting including a two-piece outer rigid member.

**Claims**

1. A resilient mounting comprising an outer rigid member (2) formed with an aperture (3) in which is situated an inner rigid member (4), first and second axially spaced resilient annular load bearing diaphragms (18, 19) interconnecting the outer and inner members (2, 4) and arranged one on either side of a plane (P) including the centre of the mounting and extending transverse to the longitudinal axis of the mounting to define an annular chamber (21) within the mounting, characterised in that at least one of said diaphragms (18, 19) has at least one slot whereby said annular chamber is · open to the surroundings.

2. A mounting according to claim 1 characterised in that said diaphragms (18, 19) are arranged symmetrically with respect to said plane (P).

3. A mounting according to claim 2 characterised in that each diaphragm (18, 19) is provided at a respective one end of the mounting (1).

4. A mounting according to any of the preceding claims characterised in that each diaphragm (18, 19) is of substantially C-shape in axial cross-section with the apex thereof directed axially outwards of the mounting (1).

5. A mounting according to any one of the preceding claims characterised in that the diaphragms (18, 19) comprise the end portions of an annular hollow tubular bush (15) the inner and outer centre portions (16, 17) of which are attached to the inner and outer members (4, 2) respectively.

6. A mounting according to any one of the preceding claims characterised in that the outer member (2) is divided radially into two elements (6, 7) respective adjacent ends (8, 9) of which are secured to one another.

7. A mounting according to any one of the preceding claims characterised in that the outer member (2) is adapted for pivotal movement with respect to a component to which the member (2) is secured in use.

8. An installation incorporating a resilient mounting according to any one of claims 1 to 7 characterised in that the inner member (4) supports the ball race of a divided propeller shaft and the outer member (2) is attached to a vehicle body.

9. An installation according to claim 8 characterised in that the outer member (2) is pivoted about an axis transverse to the longitudinal axis of the mounting.

**Patentansprüche**

1. Elastische Lagerung mit einem äußeren starren Glied (2) mit einer Öffnung (3), in der sich ein inneres starres Glied (4) befindet, wobei erste und zweite im Abstand angeordnete elastische lasttragende Membranen (18, 19) die äußeren und inneren Glieder (2, 4) miteinander verbinden und auf irgendeiner Ebene (P) angeordnet sind, die die Mitte der Lagerung enthält und sich quer zur Längsachse der Lagerung erstreckt, zur Bildung einer Ringkammer (21) innerhalb der Lagerung, dadurch gekennzeichnet, daß wenigstens eine der Membranen (18, 19) wenigstens einen Einschnitt aufweist, wodurch die ringförmige Kammer zur Umgebung hin offen ist.

2. Lagerung nach Anspruch 1, dadurch gekennzeichnet, daß die Membranen (18, 19) zur Ebene (P) symmetrisch angeordnet sind.

3. Lagerung nach Anspruch 2, dadurch gekennzeichnet, daß jede Membran (18, 19) am jeweiligen einen Ende der Lagerung (1) vorgesehen ist.

4. Lagerung nach einem der vorhergehenden Ansprüche, dadurch gekennzeichnet, daß jede Membran (18, 19) einen im wesentlichen T-förmigen Querschnitt hat, dessen Scheitel von der Lagerung axial nach außen gerichtet ist.

5. Lagerung nach einem der vorhergehenden Ansprüche, dadurch gekennzeichnet, daß die Membranen (18, 19) die Endteile einer ringförmigen hohlen rohrförmigen Buchse (15) aufweisen, deren innere und äußere Mittelteile (16, 17) am inneren bzw. äußeren Glied (4, 2) befestigt sind.

6. Lagerung nach einem der vorhergehenden Ansprüche, dadurch gekennzeichnet, daß das äußere Glied (2) radial in zwei Elemente (6, 9) unterteilt ist, deren jeweilige angrenzende Enden (8, 9) aneinander befestigt sind.

7. Lagerung nach einem der vorhergehenden Ansprüche, dadurch gekennzeichnet, daß das äußere Glied (2) gegenüber einem Bauteil, an dem das Glied (2) bei Gebrauch befestigt ist, eine Schwenkbewegung ausführen kann.

8. Vorrichtung mit einer elastischen Lagerung nach einem der Ansprüche 1 bis 7, dadurch gekennzeichnet, daß das innere Glied (4) den Kugellaufkranz einer unterteilten Antriebswelle trägt, und daß das äußere Glied (2) an einem Fahrzeugaufbau befestigt ist.

9. Vorrichtung nach Anspruch 8, dadurch gekennzeichnet, daß das äußere Glied 2 um eine Achse schwenkbar ist, die zur Längsachse der Lagerung quer verläuft.

**Revendications**

1. Support élastique comprenant un élément extérieur rigide (2) pourvu d'une ouverture (3) dans laquelle est disposé un élément intérieur rigide (4), des premier et second diaphragmes annulaires élastiques (18, 19) de support de charges, espacés axialement et assurant la liaison des éléments extérieur et intérieur (2, 4) entre eux en étant disposés respectivement de chaque côté d'un plan (P) passant par le centre du support et s'étendant transversalement à l'axe longitudinal du support afin de définir une chambre annulaire (21) à l'intérieur du support, caractérisé en ce qu'au moins un desdits diaphragmes (18, 19) comporte au moins une fente de manière que ladite chambre annulaire soit ouverte vers l'environnement.

2. Support selon la revendication 1, caractérisé en ce que lesdits diaphragmes (18, 19) sont disposés symétriquement par rapport audit plan (P).

3. Support selon la revendication 2, caractérisé en ce que chaque diaphragme (18, 19) est placé à une extrémité respective du support (1).

4. Support selon une quelconque des revendications 1 à 3, caractérisé en ce que chaque diaphragme (18, 19) a une section droite axiale sensiblement en forme de C et dont le sommet est dirigé axialement vers l'extérieur du support (1).

5. Support selon une quelconque des revendications 1 à 4, caractérisé en ce que les diaphragmes (18, 19) comprennent les parties extrêmes d'un manchon tubulaire creux annulaire (15) dont les parties centrales intérieure et extérieure (16, 17) sont respectivement fixées sur les éléments intérieur et extérieur (4, 2).

6. Support selon une quelconque des revendications 1 à 5, caractérisé en ce que l'élément extérieur (2) est divisé radialement en deux organes (6, 7) dont des extrémités adjacentes respectives (8, 9) sont fixées l'une sur l'autre.

7. Support selon une quelconque des revendications 1 à 6, caractérisé en ce que l'élément extérieur (2) est adapté pour pouvoir pivoter par rapport à un composant sur lequel l'élément (2) est fixé en service.

8. Installation comportant un support élastique selon une quelconque des revendications 1 à 7, caractérisée en ce que l'élément intérieur (4) supporte le roulement à billes d'un arbre de propulsion divisé et l'élément extérieur (2) est fixé sur une caisse de véhicule.

9. Installation selon la revendication 8, caractérisée en ce que l'élément extérieur (2) peut pivoter autour d'un axe orienté transversalement à l'axe longitudinal du support.

FIG.1

FIG.2

FIG.4

FIG.3

30 35

34

31

33 11 12 36

2

8

**FIG.5**

30

20 33

32

2

9 8

**FIG.6**

A

30

33

32 32

2

**FIG.7**